# EUROPEAN PATENT APPLICATION

(11) **EP 4 358 257 A1**
(43) Date of publication of application: **24.04.2024**
(21) Application number: 22867157.4
(22) Date of filing: 17.08.2022
(51) Int. Cl.: H01M 50/242, H01G 11/12, H01G 11/78, H01M 50/289, H01M 50/291

(54) **POWER STORAGE DEVICE**

(30) Priority: 08.09.2021 JP 2021146433
(71) Applicant: GS Yuasa International Ltd., Kisshoin, Minami-ku, Kyoto-shi, Kyoto 601-8520 (JP)
(72) Inventor: KANEMOTO, Masaki, Kyoto-shi, Kyoto 601-8520 (JP)
(74) Representative: Isarpatent
(86) International application number: PCT/JP2022/031139
(87) International publication number: WO 2023/037835

(57) **Abstract**

An energy storage apparatus includes an energy storage device unit including a plurality of energy storage devices, an outer case accommodating the energy storage device unit, and a plate-shaped reinforcing member. The reinforcing member is fixed in a posture along a fixing surface which is an inner surface of the outer case or an outer surface of the outer case. An outer shape of the reinforcing member is larger than an outer shape of the energy storage device unit when viewed from a direction perpendicular to the fixing surface.

## Description

### TECHNICAL FIELD

The present invention relates to an energy storage apparatus including an energy storage device and an outer case accommodating the energy storage device.

### BACKGROUND ART

Patent Document 1 discloses a battery pack including a battery cell, a housing accommodating the battery cell, and a reinforcing member fixed to the housing. In this battery pack, the reinforcing member is fixed to the housing with a plurality of bolts.

### PRIOR ART DOCUMENT

### PATENT DOCUMENT

Patent Document 1: JP-A-2011-249315

### SUMMARY OF THE INVENTION

### PROBLEMS TO BE SOLVED BY THE INVENTION

The reinforcing member provided for the conventional battery pack (energy storage apparatus) is provided along the side wall portion of the outer case. The reinforcing member has a size that makes part of the cell (energy storage device) protrude when viewed from a direction perpendicular to the side wall portion. For this reason, there is a possibility that the effect of protecting the energy storage apparatus by the reinforcing member cannot be expected against an impact from a direction parallel to the side wall portion.

The present invention has been made by the inventor of the present application with a new focus on the above problems, and an object of the present invention is to provide an energy storage apparatus with improved safety.

### MEANS FOR SOLVING THE PROBLEMS

An energy storage apparatus according to an aspect of the present invention includes an energy storage device unit including a plurality of energy storage devices, an outer case accommodating the energy storage device unit, and a plate-shaped reinforcing member fixed in a posture along a fixing surface which is an inner surface of the outer case or an outer surface of the outer case. An outer shape of the reinforcing member is larger than an outer shape of the energy storage device unit when viewed from a direction perpendicular to the fixing surface.

### ADVANTAGES OF THE INVENTION

According to the present invention, it is possible to provide an energy storage apparatus with improved safety.

### BRIEF DESCRIPTION OF THE DRAWINGS

Fig. 1 is a perspective view showing an external appearance of an energy storage apparatus according to an embodiment.
Fig. 2 is an exploded perspective view of an energy storage apparatus according to the embodiment.
Fig. 3 is a cross-sectional view showing a structural relationship between a reinforcing member and an outer case according to the embodiment.
Fig. 4 is a cross-sectional view showing a state in which the reinforcing member according to the embodiment is fixed to the outer case.
Fig. 5 is a cross-sectional view showing a state in which a plurality of energy storage devices is accommodated in the outer case according to the embodiment.
Fig. 6 is a schematic view showing a relationship in size between the reinforcing member and the energy storage device unit according to the embodiment.
Fig. 7 is an exploded perspective view of an energy storage apparatus including an outer case having no convex part and a reinforcing member having no opening portion.
Fig. 8 is a cross-sectional view showing the configuration of a reinforcing member and its peripheral part according to the first modification of the embodiment.
Fig. 9 is a cross-sectional view showing the configuration of a reinforcing member and its peripheral part according to the second modification of the embodiment.
Fig. 10 is a cross-sectional view showing the configuration of a reinforcing member and its peripheral part according to the third modification of the embodiment.

### MODE FOR CARRYING OUT THE INVENTION

(1) An energy storage apparatus according to an aspect of the present invention includes an energy storage device unit including a plurality of energy storage devices, an outer case accommodating the energy storage device unit, and a plate-shaped reinforcing member fixed in a posture along a fixing surface which is an inner surface of the outer case or an outer surface of the outer case. An outer shape of the reinforcing member is larger than an outer shape of the energy storage device unit when viewed from a direction perpendicular to the fixing surface.
   According to this configuration, the outer shape of the plate-shaped reinforcing member is larger than the outer shape of the energy storage device unit and hence, even when an external force is applied to the energy storage apparatus from a direction parallel to the reinforcing member, the reinforcing member can resist the external force. Therefore, in a case in which some kind of object collides with the energy storage apparatus, the possibility that the impact applied to the energy storage device unit is alleviated by the reinforcing member is improved. As described above, the energy storage apparatus according to the present aspect is an energy storage apparatus with improved safety.
(2) In the energy storage apparatus according to (1), an outer shape of the outer case may be larger than an outer shape of the reinforcing member when viewed from a direction perpendicular to the fixing surface.
   As described above, since the outer shape of the reinforcing member is smaller than the outer shape of the outer case, an increase in the size of the energy storage apparatus due to the provision of the reinforcing member is suppressed.
(3) In the energy storage apparatus according to (1) or (2), the fixing surface may be the inner surface of the outer case, and the reinforcing member may be disposed inside the outer case.
   According to this configuration, since the reinforcing member is disposed inside the outer case, the outer case can be reinforced without changing the outer size of the energy storage apparatus.
(4) The energy storage apparatus according to any one of (1) to (3), the outer case may include a convex part being provided integrally with the outer case, the convex part protruding from the fixing surface, and the reinforcing member may include an opening portion being opened to a facing surface that is a surface facing the fixing surface and may be fixed to the fixing surface in a state in which the convex part is inserted into the opening portion.
   With such a configuration, the outer case is fixed while the outer case is positioned by the convex parts formed integrally with the outer case. Since the convex parts integrally formed on the outer case do not move with respect to the outer case, the reinforcing member is more reliably positioned and fixed to the outer case. Therefore, the reinforcing member can be accurately fixed to the position where reinforcement should be provided, and the positional displacement and the like of the reinforcing member at the time of using the energy storage apparatus can be suppressed. That is, the effectiveness of the protection function of the energy storage apparatus by the reinforcing member is improved.
(5) In the energy storage apparatus according to (4), the convex part may include a proximal portion protruding from the fixing surface and a distal end portion further protruding from the proximal portion, an outer shape of the distal end portion may be smaller than an outer shape of the proximal portion when the convex part is viewed from a protruding direction of the convex part, and the opening portion of the reinforcing member may be formed in a size that allows insertion of the distal end portion and does not allow insertion of the proximal portion.
   According to this configuration, the convex part has a two-step shape. When the plate-shaped reinforcing member is disposed such that the convex part is inserted into the opening portion, a gap equal to the height of the proximal portion (the protruding length from the fixing surface) is formed between the reinforcing member and the fixing surface of the outer case. Therefore, the air layer existing in this gap can suppress the thermal influence from one of the inside of the outer case and the outside of the outer case to the other. This contributes to the improvement of safety of the energy storage apparatus.
(6) In the energy storage apparatus according to (5), the reinforcing member may be supported by the proximal portion to form a gap between the reinforcing member and the fixing surface, and the energy storage apparatus may further include an adhesive member disposed in the gap and bonding the reinforcing member and the fixing surface to each other.
   According to this configuration, an adhesive member such as an adhesive is disposed in the gap corresponding to the height of the proximal portion between the reinforcing member and the fixing surface. This makes it possible to bond the reinforcing member and the fixing surface to each other in a wide range with, for example, an adhesive having a thickness as designed. That is, the thickness of the adhesive can be defined by the height of the proximal portion. As a result, the reinforcing member is more stably fixed to the fixing surface.
(7) In the energy storage apparatus according to any one of (4) to (6), the opening portion may be provided to penetrate the reinforcing member in a thickness direction of the reinforcing member, and the convex part may be formed in a size that makes the convex part protrude from the opening portion in a state in which the convex part is inserted into the opening portion, the convex part being disposed at a position facing the energy storage device.
   According to this configuration, it is possible to perform the position regulation of the energy storage device in the vertical direction, the horizontal direction, or the like by using the convex parts protruding through the reinforcing member.
(8) In the energy storage apparatus according to any one of (4) to (6), the opening portion may be provided to penetrate the reinforcing member in a thickness direction of the reinforcing member, and the convex part may be formed in a size that makes the convex part not protrude from the opening portion in a state in which the convex part is inserted into the opening portion.

According to this configuration, the convex part does not protrude from the outer surface (surface opposite to the opposing surface) of the reinforcing member. Therefore, when the fixing surface is the inner surface of the outer case, the convex part does not interfere with the placement of the member accommodated in the outer case. When the fixing surface is the outer surface of the outer case, the energy storage apparatus can be disposed in a state in which the outer surface of the reinforcing member is disposed along the wall surface of any object. That is, since the convex part is formed so as not to be a portion that unnecessarily protrudes, it is possible to effectively utilize a space inside or outside the outer case of the energy storage apparatus with improved safety.

An energy storage apparatus according to an embodiment of the present invention (including its modification) will be described below with reference to the accompanying drawings. Note that the embodiment described below shows a comprehensive or specific example. Numerical values, shapes, materials, constituent elements, placement positions and connection modes of the constituent elements, manufacturing processes, the order of the manufacturing processes, and the like presented in the following embodiment are merely examples and are not intended to limit the present invention. In each drawing, dimensions and the like are not strictly shown. In the drawings, the same or similar constituent elements are denoted by the same reference numerals.

In the following description and drawings, the short direction of the outer case of an energy storage apparatus or a direction in which short side surfaces of an energy storage device oppose each other is defined as an X-axis direction. The long direction of the outer case of the energy storage apparatus or the arrangement direction of the plurality of energy storage devices is defined as a Y-axis direction. A direction in which the body of the outer case of the energy storage apparatus and the lid body of the outer case of the energy storage apparatus are arranged side by side or a vertical direction is defined as a Z-axis direction. The X-axis direction, the Y-axis direction, and the Z-axis direction are directions intersecting (orthogonal in this embodiment) each other. Although the Z-axis direction may not be the vertical direction depending on the usage mode, the Z-axis direction will be described below as the vertical direction for convenience of description.

In the following description, an X-axis positive direction indicates the arrow direction of the X axis, and an X-axis negative direction indicates a direction opposite to the X-axis positive direction. The same applies to the Y-axis direction and the Z-axis direction. The term "X-axis direction" simply means either one or both of directions parallel to the X-axis. The same applies to terms related to the Y-axis and the Z-axis.

Furthermore, expressions indicating relative directions or postures, such as parallel and orthogonal, strictly include cases where the directions or postures are not the same. Two directions being orthogonal to each other not only means that the two directions are completely orthogonal to each other, but also means that the two directions are substantially orthogonal to each other, that is, the two directions include a difference of, for example, about several percent. In addition, the term "X-axis direction" simply means either one or both of directions parallel to the X-axis. The same applies to terms related to the Y-axis and the Z-axis. In the following description, the expression "insulation" means "electrical insulation".

### (Embodiment)

### [1. General description of energy storage apparatus]

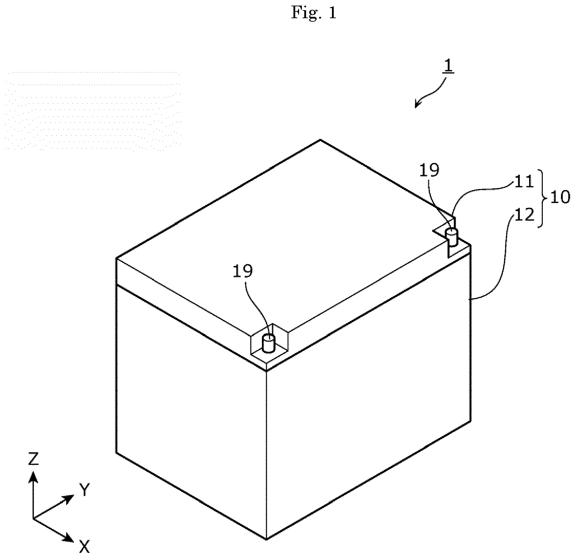

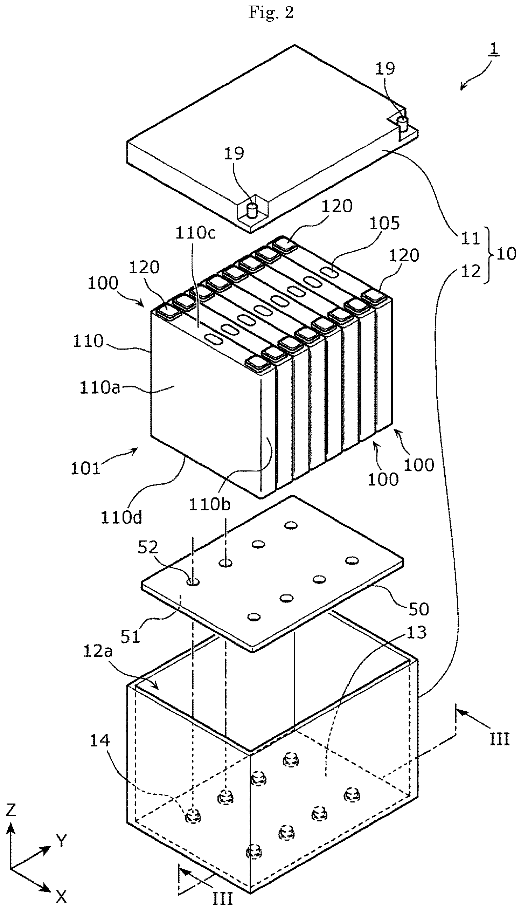

A schematic configuration of an energy storage apparatus according to the present embodiment will be described first. Fig. 1 is a perspective view showing an external appearance of an energy storage apparatus 1 according to an embodiment. Fig. 2 is an exploded perspective view of the energy storage apparatus 1 according to the embodiment. In an outer case 10, in addition to the members shown in Fig. 2 and subsequent drawings, bus bars, electric equipment, and the like are accommodated, and a spacer arranged along energy storage devices 100, a binding member binding the plurality of energy storage devices 100, and the like can be arranged. However, illustrations and descriptions of these members are appropriately omitted.

The energy storage apparatus 1 is an apparatus that can charge electricity from the outside and discharge electricity to the outside and has a substantially rectangular parallelepiped shape in the present embodiment. For example, the energy storage apparatus 1 is a battery module (assembled battery) used for power storage applications, power supply applications, and the like. More specifically, the energy storage apparatus 1 is used as, for example, a battery for driving or starting the engine of a moving body such as an automobile, a motorcycle, a watercraft, a ship, a snowmobile, an agricultural machine, a construction machine, or a railway vehicle for an electric railway. Examples of the automobile include an electric vehicle (EV), a hybrid electric vehicle (HEV), a plug-in hybrid electric vehicle (PHEV), and a fossil fuel (gasoline, light oil, liquefied natural gas, or the like) vehicle. Examples of the railway vehicle for an electric railway include a train, a monorail, a linear motor car, and a hybrid train including both a diesel engine and an electric motor. The energy storage apparatus 1 can also be used as a stationary battery or the like used for home use, business use, or the like.

As shown in Figs. 1 and 2, the energy storage apparatus 1 includes the outer case 10, an energy storage device unit 101 and a reinforcing member 50 which are accommodated in the outer case 10. The outer case 10 is a case (module case) having a box shape (substantially rectangular parallelepiped shape) which forms the housing of the energy storage apparatus 1. That is, the outer case 10 is disposed outward the energy storage device unit 101, fixes the energy storage device unit at a predetermined position, and protects the energy storage device unit 101 from an impact or the like. The outer case 10 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), or an ABS resin, a composite material thereof, or an insulation-coated metal.

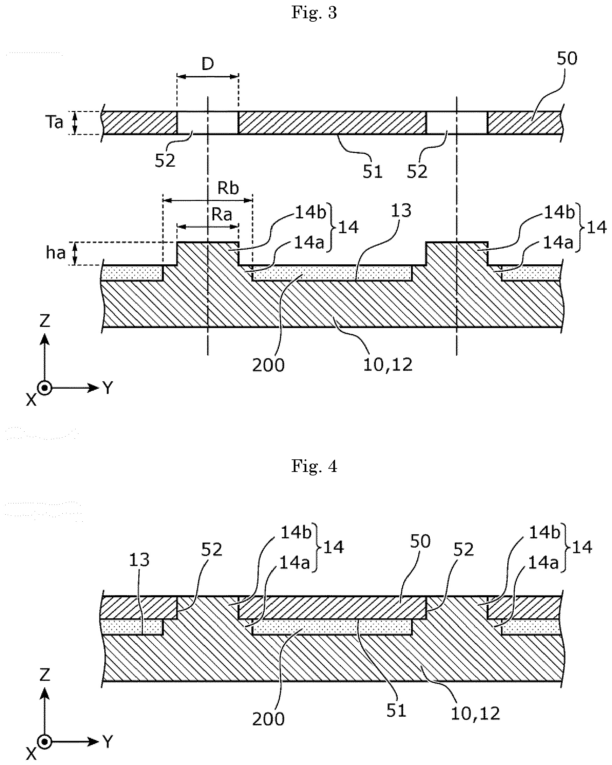

The outer case 10 includes an outer case body 12 forming the body of the outer case 10 and a lid body 11. The outer case body 12 is a bottomed rectangular cylindrical housing in which an opening 12a is formed on a Z-axis positive direction side. The reinforcing member 50 is fixed to the outer case body 12. To be more specific, the outer case body 12 according to the present embodiment includes a fixing surface 13 which is an inner surface facing the energy storage device unit 101 in the Z-axis direction, and the reinforcing member 50 is fixed in a posture along the fixing surface 13. The reinforcing member 50 is a plate-shaped member made of a metal material such as an aluminum alloy or iron and is a member which improves the safety of the energy storage apparatus 1 by reinforcing the outer case 10. On the fixing surface 13 of the outer case 10, convex parts 14 which are integrally formed with the outer case 10 (more specifically, the outer case body 12) are disposed. The reinforcing member 50 is fixed in a state in which the convex parts 14 are inserted. The configuration of the reinforcing member 50 and the peripheral part thereof will be described later with reference to Figs. 3 to 6.

The lid body 11 is a rectangular member which closes the opening 12a of the outer case body 12. The lid body 11 is joined to the outer case body 12 with an adhesive agent, heat sealing, ultrasonic welding, fastening with a bolt and a nut, or the like. The lid body 11 is provided with, for example, an exhaust tube (not shown). When gas is discharged from a gas discharge portion 105 of the energy storage device 100, the gas inside the outer case 10 is discharged to the outside of the outer case 10 through the exhaust tube. The joint portion between the outer case body 12 and the lid body 11 has relatively high airtightness by being formed from an adhesive, heat seal, or the like as described above. Therefore, when gas is discharged from the energy storage device 100, the leakage of the gas from the joint portion is suppressed. A pair of external terminals 19, which are a pair of positive and negative module terminals (total terminals), are disposed on the lid body 11. The energy storage apparatus 1 charges electricity from the outside and discharges electricity to the outside through the pair of external terminals 19. The external terminal 19 is formed of a conductive member made of a metal such as aluminum, an aluminum alloy, copper, or a copper alloy.

The energy storage device unit 101 is a group of energy storage devices 100 including one or more energy storage devices 100. The energy storage device unit 101 according to the present embodiment includes eight energy storage devices 100, and the eight energy storage devices 100 are arranged in the Y-axis direction with the long side surfaces 110a facing the Y axis direction. The energy storage device unit 101 may include a spacer or a holder (not illustrated) disposed along side surfaces of the energy storage devices 100. The energy storage device unit 101 may include a binding member (not illustrated) which binds the plurality of energy storage devices 100 in the arrangement direction thereof. The eight energy storage devices 100 included in the energy storage device unit 101 are connected in series via, for example, a plurality of bus bars (not illustrated). The electrical connection mode of the eight energy storage devices 100 is not limited to this. Four energy storage device 100 groups each including two energy storage devices 100 connected in parallel may be formed, and these four energy storage device 100 groups may be connected in series using a plurality of bus bars.

The energy storage device 100 is a secondary battery (battery cell) that can charge and discharge electricity, and more specifically, is a nonaqueous electrolyte secondary battery such as a lithium ion secondary battery. As shown in Fig. 2, the energy storage device 100 includes a case 110 having a flat rectangular parallelepiped shape (prismatic shape). An electrode assembly, a current collector, an electrolyte solution and the like (not shown) are accommodated in the case 110. As the electrode assembly, a wound electrode assembly is used, which is formed by winding positive electrode plates and negative electrode plates between which separators are sandwiched in a layered manner. Examples of the electrode assembly included in the energy storage device 100 include, in addition to the wound electrode assembly, a stack-type (stacking type) electrode assembly formed by stacking a plurality of flat plate-shaped electrode plates and a bellows-type electrode assembly formed by folding electrode plates in a bellows shape. The type of electrolyte solution contained in the case 110 is not particularly limited as long as it does not impair the performance of the energy storage device 100, and various types of electrolytes can be selected. The energy storage device 100 is not limited to a nonaqueous electrolyte secondary battery and may be a secondary battery other than the nonaqueous electrolyte secondary battery, or may be a capacitor. The energy storage device 100 may be not a secondary battery but a primary battery that allows the user to use stored electricity without charged electricity. The energy storage device 100 may be a pouch type energy storage device. The energy storage device 100 may be a battery using a solid electrolyte. The shape of the energy storage device 100 is not limited to the above prismatic shape and may be a polygonal columnar shape, a cylindrical shape, an elliptical columnar shape, an oval columnar shape, or the like other than the above square shape.

As shown in Fig. 2, the case 110 is a rectangular parallelepiped case having a pair of long side surfaces 110a, a pair of short side surfaces 110b, a bottom surface 110d, and a terminal arrangement surface 110c. A pair of electrode terminals 120 and a gas discharge portion 105 are provided on the terminal arrangement surface 110c. The case 110 having such a configuration has a structure that can be internally sealed by, for example, welding the case body and the lid plate forming the terminal arrangement surface 110c to each other upon accommodating the electrode assembly and the like inside the case body forming portions other than the terminal arrangement surface 110c. The material for the case 110 is not particularly limited, but is preferably a weldable metal such as stainless steel, aluminum, an aluminum alloy, iron, or a plated steel plate.

The electrode terminal 120 is a terminal member electrically connected to the electrode assembly accommodated in the case 110 and is provided to protrude from the terminal arrangement surface 110c. One of the pair of electrode terminals 120 is electrically connected to the positive electrode of the electrode assembly, and the other is electrically connected to the negative electrode of the electrode assembly. The electrode terminal 120 is formed of a conductive member such as aluminum, an aluminum alloy, copper, or a copper alloy.

In the energy storage apparatus 1 having the above-described configuration, the reinforcing member 50 is disposed between the energy storage device unit 101 including the plurality of energy storage devices 100 and the bottom surface (fixing surface 13) of the outer case 10. The reinforcing member 50 has a function of protecting the energy storage apparatus 1 from an impact or the like applied from the outside. Hereinafter, the configuration of the reinforcing member 50 and its peripheral part will be described with reference to Figs. 3 to 6 in addition to Fig. 2 described above.

### [2. Configuration of reinforcing member and its peripheral part]

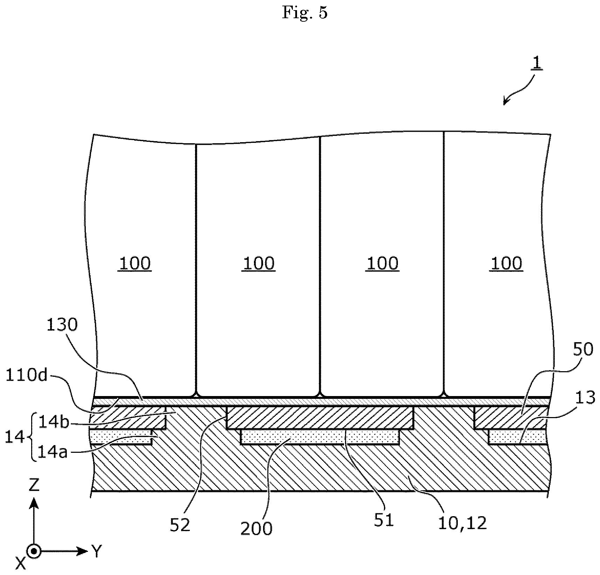

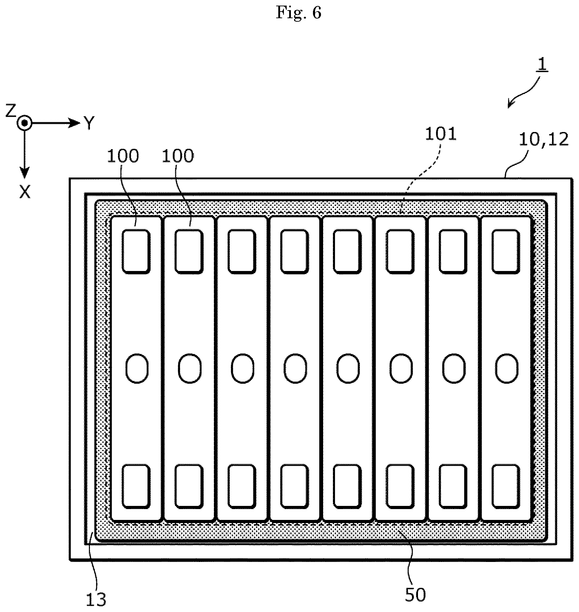

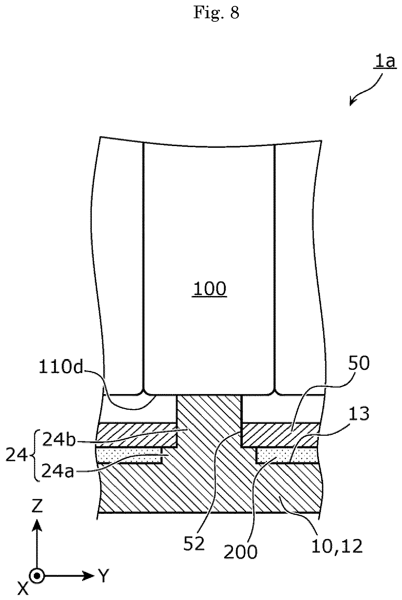

Fig. 3 is a cross-sectional view showing a structural relationship between the reinforcing member 50 and the outer case 10 according to the embodiment. Fig. 4 is a cross-sectional view showing a state in which the reinforcing member 50 according to the embodiment is fixed to the outer case 10. Figs. 3 and 4 each show a cross section of part of each of the reinforcing member 50 and the outer case body 12 in the ZY plane passing through a line III-III in Fig. 2. Fig. 5 is a cross-sectional view showing a state in which the plurality of energy storage devices 100 are accommodated in the outer case 10 according to the embodiment. Fig. 5 shows a cross section of part of each of the reinforcing member 50 and the outer case body 12 at the same position as in Fig. 3, and the plurality of energy storage devices 100 are shown not by a cross section but by a side surface. The same applies to Figs. 8 to 10 described later. Fig. 6 is a schematic view showing a relationship in size between the reinforcing member 50 and the energy storage device unit 101 according to the embodiment. Fig. 6 simply shows the reinforcing member 50 and the energy storage device unit 101 as viewed from above (the Z-axis positive direction). Referring to Fig. 6, dots are attached to the reinforcing member 50 for easy understanding of the arrangement ranges of the reinforcing member 50 and the energy storage device unit 101, and an approximate outer shape of the energy storage device unit 101 is indicated by a rectangular dotted line.

As shown in Figs. 2 to 5, in the outer case body 12 of the outer case 10, the convex parts 14 are formed on the fixing surface 13 facing the energy storage device unit 101 in the Z-axis direction. The convex part 14 is not a component such as a bolt which is formed separately from the outer case 10 and is integrally formed with the outer case body 12 of the outer case 10. When the outer case body 12 is formed by resin molding, the plurality of convex parts 14 are formed together with other portions of the outer case body 12.

In the present embodiment, the plurality of convex parts 14 are dispersedly arranged on fixing surface 13. The reinforcing member 50 includes a plurality of opening portions 52, each of which has a size that allows the insertion of the convex part 14. Specifically, the reinforcing member 50 disposed along the fixing surface 13 includes the plurality of opening portions 52 in a facing surface 51 which is a surface facing the fixing surface 13. In the present embodiment, each of the plurality of opening portions 52 penetrates the reinforcing member 50 in the thickness direction of the reinforcing member. That is, the opening portion 52 forms a through hole that is open to the facing surface 51 and is also open to the surface opposite to the facing surface 51.

When the reinforcing member 50 configured as described above is fixed to the outer case 10, an adhesive member 200 is disposed in a region other than the plurality of convex parts 14 on the fixing surface 13, and the reinforcing member 50 is disposed thereon. As the adhesive member 200, a silicone resin-based adhesive can be adopted. In addition to the adhesive, a double-sided tape having adhesive layers on both sides or the like can be adopted as the adhesive member 200.

When the reinforcing member 50 is disposed with respect to the fixing surface 13, as shown in Figs. 3 and 4, the convex parts 14 protruding from the fixing surface 13 are respectively inserted into the plurality of opening portions 52 of the reinforcing member 50. In this state, the adhesive member 200 which is an adhesive is solidified, and the reinforcing member 50 is firmly fixed to the outer case 10. Further, the energy storage device unit 101 is disposed from above, and as a result, the plurality of energy storage devices 100 are disposed side by side above the reinforcing member 50. It is not essential that the adhesive member 200 is disposed in the gap between the fixing surface 13 and the reinforcing member 50. The reinforcing member 50 may be fixed to the outer case 10 by joining the convex parts 14 and the opening portions 52 to each other by means of adhesion, welding, or the like.

In this embodiment, since the reinforcing member is made of a metal, as shown in Fig. 5, an insulating member 130 is disposed between the reinforcing member 50 and the case 110 of the energy storage device 100 which is also made of metal. The insulating member 130 is a member formed of a resin (PP or the like) which can be adopted as a material of the above-described outer case 10. Although Fig. 5 shows a sheet-like member as the insulating member 130, the shape, size, and the like of the insulating member 130 are not limited as long as the insulating member can electrically insulate the plurality of energy storage devices 100 and the reinforcing member 50 from each other. When each of the cases 110 of the plurality of energy storage devices 100 is covered with an insulating film, the insulating film can function as the insulating member 130.

The reinforcing member 50 and the energy storage device unit 101 disposed as described above have a size relationship like that shown in Fig. 6. To be more specific, when viewed from a direction perpendicular to the fixing surface 13 (in plan view in the present embodiment), the energy storage device unit 101 is included inside the outer shape of the reinforcing member 50. The reinforcing member 50 and the energy storage device unit 101 are accommodated in the outer case 10. That is, in plan view, the outer shape of the reinforcing member 50 is larger than the outer shape of the energy storage device unit 101, and the outer shape of the outer case 10 is larger than the outer shape of the reinforcing member 50.

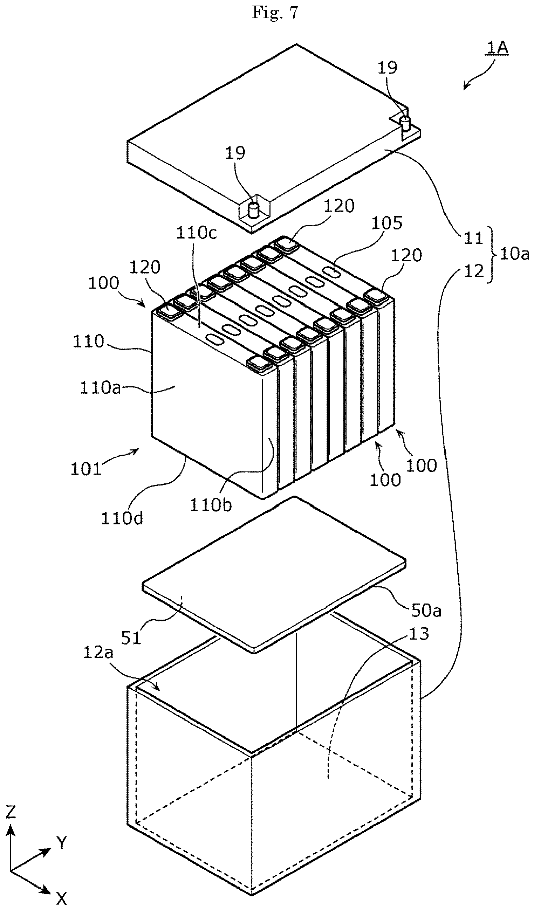

In the energy storage apparatus 1 shown in Figs. 2 to 6, the outer case 10 includes the convex parts 14 protruding from the fixing surface 13, and the reinforcing member 50 is fixed to the fixing surface 13 while the convex parts 14 are inserted into the opening portions 52. However, it is not essential that the reinforcing member 50 be fixed to the fixing surface 13 while the opening portions 52 are inserted into the convex parts 14. That is, the outer case 10 may not include the convex parts 14, and the reinforcing member 50 may not include the opening portions 52. Fig. 7 is an exploded perspective view of an energy storage apparatus 1A including an outer case 10a having no convex parts 14 and a reinforcing member 50a having no opening portions 52.

The energy storage apparatus 1A shown in Fig. 7 is common to the energy storage apparatus 1 shown in Figs. 2 to 6 in a basic configuration. To be more specific, in the energy storage apparatus 1A, the outer shape of the reinforcing member 50a in plan view is larger than the outer shape of the energy storage device unit 101. In the energy storage apparatus 1A, the outer shape of the outer case 10a in plan view is larger than the outer shape of the reinforcing member 50a. In these respects, the energy storage apparatus 1A is common to the energy storage apparatus 1 shown in Figs. 2 to 6. In the energy storage apparatus 1A shown in Fig. 7, unlike the energy storage apparatus 1 shown in Figs. 2 to 6, the convex parts 14 are not formed on the fixing surface 13 of the outer case body 12 which the outer case 10a includes, and the reinforcing member 50a does not include the opening portions 52. Even in this case, the reinforcing member 50a can be bonded to the fixing surface 13 using the adhesive member 200. As a result, the fixing surface 13 and the reinforcing member 50a are fixed to each other on relatively wide surfaces. With such a configuration, the position of the reinforcing member 50a with respect to the outer case 10a can be stabilized.

Referring to Figs. 2 to 6, the reinforcing member 50 is disposed along the fixing surface 13 which is an inner surface of the outer case 10, but the reinforcing member 50 may be disposed along the outer surface of the outer case 10. That is, even when the reinforcing member 50 is disposed outside the outer case 10, it is possible to obtain a protection effect for the energy storage devices 100 (the energy storage device unit 101) by the reinforcing member 50. An aspect in which the reinforcing member 50 is disposed along the outer surface of the outer case 10 will be described later as one of modifications.

As described above, the energy storage apparatus 1 according to the present embodiment includes the energy storage device unit 101 including the plurality of energy storage devices 100, the outer case 10 accommodating the energy storage device unit 101, and the plate-shaped reinforcing member 50. The reinforcing member 50 is fixed in a posture along the fixing surface 13 which is the inner surface of the outer case or the outer surface of the outer case 10. When viewed from a direction perpendicular to the fixing surface 13, the outer shape of the reinforcing member 50 is larger than the outer shape of the energy storage device unit 101.

As described above, in the energy storage apparatus 1 according to the present embodiment, the outer shape of the plate-shaped reinforcing member 50 is larger than the outer shape of the energy storage device unit 101 and hence, even when an external force is applied to the energy storage apparatus 1 from a direction parallel to the reinforcing member 50 (a direction parallel to the XY plane), the reinforcing member 50 can resist the external force. Therefore, in a case in which the energy storage apparatus 1 or a movable body or the like on which the energy storage apparatus 1 is mounted collides with some kind of object, the possibility that the impact applied to the energy storage device unit 101 is alleviated by the reinforcing member 50 is improved. As described above, the energy storage apparatus 1 according to the present aspect is an energy storage apparatus with improved safety.

More specifically, since the outer shape of the reinforcing member 50 is larger than the outer shape of the energy storage device unit 101, as shown in Fig. 6, the reinforcing member 50 can protrude from the energy storage device unit 101 over the entire circumference of the energy storage device unit 101 in plan view. As a result, the function of absorbing or alleviating the impact by the reinforcing member 50 is exerted in all directions in plan view.

The above-described size relationship between the outer shape of the reinforcing member 50 and the outer shape of the energy storage device unit 101 in plan view and the effect thereof are also applied to the energy storage apparatus 1A including the outer case 10a and the reinforcing member 50a shown in Fig. 7. That is, in the energy storage apparatus 1A, since the outer shape of the reinforcing member 50a is larger than the outer shape of the energy storage device unit 101, the reinforcing member 50a can resist an external force applied to the energy storage apparatus 1A. As a result, the safety of the energy storage apparatus 1a is improved. More specifically, the reinforcing member 50a can protrude from the energy storage device unit 101 over the entire circumference of the energy storage device unit 101 in plan view. As a result, the function of absorbing or alleviating the impact by the reinforcing member 50a is exerted in all directions in plan view.

In the present embodiment, when viewed from a direction perpendicular to the fixing surface 13, the outer shape of the outer case 10 is larger than the outer shape of the reinforcing member 50.

As described above, since the outer shape of the reinforcing member 50 is smaller than the outer shape of the outer case 10, an increase in the size of the energy storage apparatus 1 due to the provision of the reinforcing member 50 is suppressed. This is also applied to the energy storage apparatus 1A including the outer case 10a and the reinforcing member 50a shown in Fig. 7.

As described above, the surface (fixing surface) of the outer case 10 on which the reinforcing member 50 is disposed to face the outer case 10 may be either the inner surface of the outer case 10 or the outer surface of the outer case 10. In the present embodiment, the fixing surface 13 is an inner surface of the outer case 10. The reinforcing member 50 is disposed inside the outer case 10.

As described above, in the present embodiment, since the reinforcing member 50 is disposed inside the outer case 10, the outer case 10 can be reinforced without changing the outer size of the energy storage apparatus 1. This is also applied to the energy storage apparatus 1A including the outer case 10a and the reinforcing member 50a shown in Fig. 7.

In the conventional battery pack described in Patent Document 1, a plurality of bolts is used to fix the reinforcing member to the housing (outer case). Therefore, the reinforcing member can be firmly fixed to the outer case by the fastening force of the bolts and the nuts. However, since the reinforcing member is made of a metal, the weight of the reinforcing member becomes relatively large. Therefore, in the work of attaching the reinforcing member to the outer case, it may be difficult to position the reinforcing member with respect to the housing and to maintain the position of the reinforcing member. When a hole through which a bolt extends is provided in the outer case, it poses a problem when it comes to securing airtightness at the position of the hole. With respect to these problems, the energy storage apparatus 1 shown in Figs. 2 to 6 has the following configuration.

In the energy storage apparatus 1 shown in Figs. 2 to 6, the outer case 10 includes convex parts 14 being provided integrally with the outer case 10, the convex part protruding from the fixing surface 13. The reinforcing member 50 includes the opening portions 52 being opened to the facing surface 51 that is a surface facing the fixing surface 13. The reinforcing member 50 is fixed to the fixing surface 13 in a state in which the convex parts 14 are inserted into the opening portions 52.

With such a configuration, the outer case 10 is fixed while the outer case 10 is positioned by the convex parts 14 formed integrally with the outer case 10. Since the convex parts 14 integrally formed on the outer case 10 do not move with respect to the outer case 10, the reinforcing member 50 is more reliably positioned and fixed to the outer case 10. Therefore, the reinforcing member 50 can be accurately fixed to the position where reinforcement should be provided, and the positional displacement and the like of the reinforcing member 50 at the time of using the energy storage apparatus 1 can be suppressed. That is, the effectiveness of the protection function of the energy storage apparatus 1 by the reinforcing member 50 is improved.

Since the convex parts 14 are integrally formed on the outer case 10, unlike a case in which the reinforcing member 50 is fixed by using fixing members (for example, bolts and nuts) which are separate members from the outer case 10, it is not necessary to form through holes in a wall portion forming the fixing surface 13 of the outer case 10. Therefore, there is no problem that the airtightness decreases at the portions where the reinforcing member 50 is fixed. Therefore, even when a gas is discharged from the gas discharge portion 105 of the energy storage device 100, the problem of gas leakage from the portions does not occur. Since fixing members separate from the outer case 10 are unnecessary, an increase in the number of parts of the energy storage apparatus 1 is suppressed. To be more specific, the reinforcing member 50 whose outer shape in plan view is larger than the energy storage device unit 101 is positioned and fixed by the convex parts 14 which are integrally formed on the outer case 10. With such a configuration, in plan view, a state in which the end portions of the reinforcing member 50 protrude from the energy storage device unit 101 can be maintained more reliably. Therefore, when an external force is applied from a direction parallel to the reinforcing member 50, the possibility that the reinforcing member 50 receives the external force before the energy storage device unit 101 is further improved.

In the present embodiment, the convex part 14 has not a simple convex shape but a two-step convex shape. Specifically, as shown in Figs. 3 and 4, the convex part 14 includes a proximal portion 14a protruding from the fixing surface 13 and a distal end portion 14b further protruding from the proximal portion 14a. When the convex part 14 is viewed from the protruding direction of the convex part 14 (the Z-axis positive direction in the present embodiment), the outer shape of the distal end portion 14b is smaller than the outer shape of the proximal portion 14a. The opening portion 52 of the reinforcing member 50 is formed in a size that allows the insertion of the distal end portion 14b and does not allow the insertion of the proximal portion 14a.

More specifically, in the present embodiment, the proximal portion 14a, the distal end portion 14b, and the opening portion 52 are all circular in plan view. As shown in Fig. 3, when the size (outer diameter) of the outer shape of the proximal portion 14a is represented by Rb and the outer diameter of the distal end portion 14b is represented by Ra, Ra < Rb is satisfied. When the inner diameter of the opening portion 52 of the reinforcing member 50 is represented by D, Ra < D < Rb holds. Therefore, when the convex part 14 is inserted into the opening portion 52, only the distal end portion 14b can be inserted into the opening portion 52, and the proximal portion 14a cannot be inserted into the opening portion 52 and is locked to the peripheral edge of the opening portion 52. Accordingly, as shown in Fig. 4, the convex part 14 supports the reinforcing member 50 while being separated from the fixing surface 13 by a predetermined distance.

As described above, in this embodiment, the convex part 14 has a two-step shape. When the plate-shaped reinforcing member 50 is disposed such that the convex part 14 is inserted into the opening portion 52, a gap equal to the height of the proximal portion 14a (the protruding length from the fixing surface 13) is formed between the reinforcing member 50 and the fixing surface 13 of the outer case 10. Therefore, when nothing is disposed in the gap, the air layer existing in the gap can suppress the thermal influence from one of the inside of the outer case 10 and the outside of the outer case 10 to the other. This contributes to the improvement of safety of the energy storage apparatus 1.

In the present embodiment, the gap is used as an arrangement space for the adhesive member 200. That is, since the reinforcing member 50 is supported by the proximal portion 14a, a gap is formed between the reinforcing member 50 and the fixing surface 13. The energy storage apparatus 1 includes the adhesive member 200 which is disposed in the gap and bonds the reinforcing member 50 and the fixing surface 13 to each other.

As described above, since the adhesive member 200 such as an adhesive is disposed in the gap corresponding to the height of the proximal portion 14a between the reinforcing member 50 and the fixing surface 13, the reinforcing member 50 and the fixing surface 13 can be bonded to each other in a wide range with an adhesive having a thickness as designed. That is, the thickness of the adhesive can be defined by the height of the proximal portion 14a. As a result, the reinforcing member 50 is more stably fixed to the fixing surface 13.

In the present embodiment, as shown in Figs. 3 and 4, the opening portion 52 is provided to penetrate the reinforcing member 50 in the thickness direction of the reinforcing member 50. The convex part 14 is formed in a size that makes the convex part not protrude from the opening portion 52 in a state in which the convex part 14 is inserted into the opening portion 52.

Specifically, as shown in Fig. 3, when the thickness of the reinforcing member 50 is represented by Ta, and the width (height) of the distal end portion 14b in the thickness direction is represented by ha, ha ≤ Ta is satisfied. That is, the convex part 14 does not protrude from the outer surface (the surface opposite to the facing surface 51) of the reinforcing member 50. Accordingly, when the fixing surface 13 is an inner surface of the outer case 10 as in the present embodiment, the convex parts 14 do not become obstacles to the arrangement of members (the energy storage device unit 101) accommodated in the outer case 10. Assuming that the fixing surface 13 is the outer surface of the outer case 10, the energy storage apparatus 1 can be disposed in a state in which the outer surface of the reinforcing member 50 is disposed along the wall surface of some kind of object. That is, the convex part 14 is formed so that the convex part 14 does not become an unnecessarily protruding portion. With such a configuration, it is possible to effectively utilize a space formed inside or outside the outer case 10 in the energy storage apparatus 1 with improved safety.

The energy storage apparatus 1 according to the embodiment has been described mainly with respect to the configuration of the reinforcing member 50 and its peripheral part. However, the configuration of the reinforcing member 50 and its peripheral part may be different from those in Figs. 2 to 6. Hereinafter, a modification of the configuration of the reinforcing member 50 and its peripheral part will be described focusing on a difference from the above embodiment.

### [3-1. First modification]

Fig. 8 is a cross-sectional view showing the configuration of the reinforcing member 50 and its peripheral part according to the first modification of the embodiment. In the energy storage apparatus 1a according to the present modification, the outer case 10 includes convex parts 24 which are formed integrally with the outer case 10 and protrude from the fixing surface 13. The convex part 24 has a two-step shape having a proximal portion 24a and a distal end portion 24b and is common to the convex part 14 according to the embodiment in this regard. The convex part 24 according to the present modification is different from the convex part 14 according to the embodiment in that the distal end portion 24b protrudes from the reinforcing member 50.

That is, in the present modification, the opening portion 52 is provided to penetrate the reinforcing member 50 in the thickness direction of the reinforcing member. The convex part 24 is formed in a size that makes the convex part 24 protrude from the opening portion 52 in a state in which the convex part is inserted into the opening portion 52, the convex part being disposed at a position facing the energy storage device 100.

In this manner, the convex part 24 protruding through the reinforcing member 50 is disposed at a position facing the energy storage device 100 and hence, as shown in Fig. 8, the convex part 24 can be brought into contact with a bottom surface 110d of the energy storage device 100. With such a configuration, it is possible to perform the position regulation of the energy storage device 100 in the vertical direction, the horizontal direction, or the like by using the convex parts 24. Further, the convex part 24 can function as a member which separates the energy storage device 100 and the reinforcing member 50 from each other. That is, in order to ensure a predetermined mechanical strength of the reinforcing member 50, even when the entire reinforcing member 50 is formed of a metal, the energy storage device 100 can be disposed apart from the metallic reinforcing member 50 by the convex part 24. That is, by using the convex part 24 having a function of positioning the reinforcing member 50 or the like, it is possible to improve the reliability of electrical insulation between the reinforcing member 50 and the energy storage device 100 without arranging another member having an insulating property between the reinforcing member 50 and the energy storage device 100.

### [3-2. Second modification]

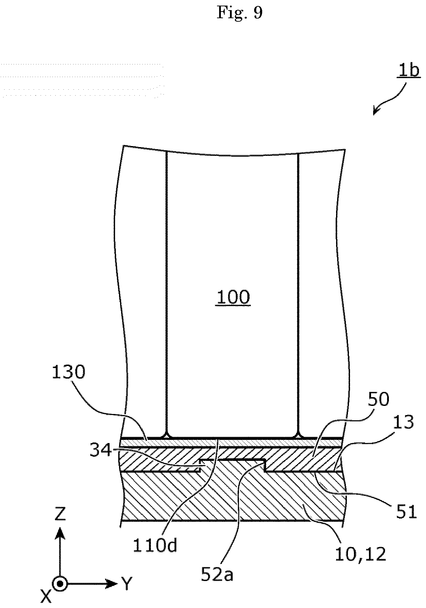

Fig. 9 is a cross-sectional view showing the configuration of the reinforcing member 50 and its peripheral part according to the second modification of the embodiment. In an energy storage apparatus 1b according to the present modification, the outer case 10 includes convex parts 34 which are formed integrally with the outer case 10 and protrude from the fixing surface 13. The reinforcing member 50 includes an opening portion 52a opened in the facing surface 51. The reinforcing member 50 is fixed to the outer case 10 while the convex part 34 is inserted into the opening portion 52a. These configurations are common to those of the embodiment.

In the present modification, the opening portion 52a does not penetrate the reinforcing member 50, and hence the convex part 34 does not protrude from the reinforcing member 50. Further, the convex part 34 is not formed in a two-step shape that supports the reinforcing member 50 while being separated from the fixing surface 13 but is formed on the outer case 10 as a simple columnar portion having no step. That is, in the present modification, the reinforcing member 50 is not maintained while being separated from the fixing surface 13. When the reinforcing member 50 configured as described above is attached to the outer case 10, an adhesive agent is applied to a predetermined region of the fixing surface 13 including one or more convex parts 34. Thereafter, the reinforcing member 50 is disposed with respect to the outer case 10 such that the convex parts 34 are respectively inserted into one or more opening portions 52a of the reinforcing member 50. That is, by inserting the convex part 34 into the opening portion 52a of the reinforcing member 50, positioning and position maintenance of the reinforcing member 50 are appropriately performed.

In the present modification, the opening portion 52a is provided in the reinforcing member 50 as a bottomed hole but may be provided in the reinforcing member 50 as a bottomless hole (that is, a through hole) like the opening portion 52 according to the embodiment. In this case, as shown in Fig. 4 or 8, the convex part 34 may be formed in a size that makes the convex part 34 penetrate the reinforcing member 50. The height (the protruding length in the Z-axis direction) of the convex part 34 may be larger than the depth of the opening portion 52a which is a bottomed hole. Accordingly, the reinforcing member 50 can be separated from the fixing surface 13, and as a result, a gap is formed between the reinforcing member 50 and the fixing surface 13 of the outer case 10. The adhesive member 200 (see Fig. 8) may be disposed in the gap. The gap may be used as an air layer that suppresses the thermal influence given from one of the inside of the outer case 10 and the outside of the outer case 10 to the other.

### [3-3. Third modification]

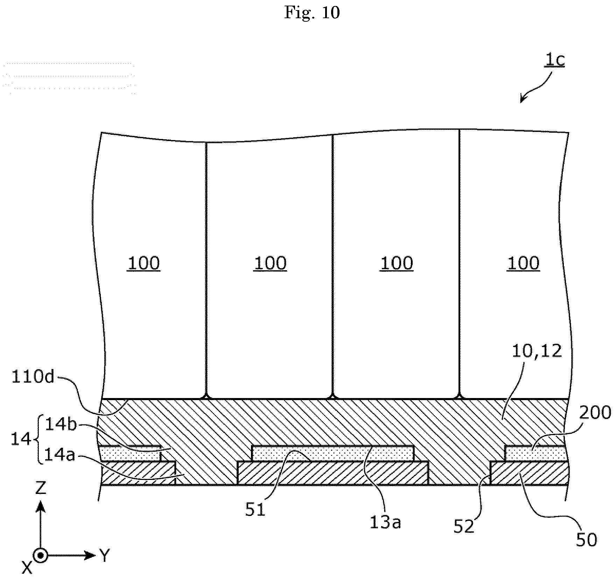

Fig. 10 is a cross-sectional view showing the configuration of the reinforcing member 50 and its peripheral part according to the third modification of the embodiment. In an energy storage apparatus 1c according to the present modification, the outer case 10 includes the convex parts 14 which are formed integrally with the outer case 10 and protrude from a fixing surface 13a. The reinforcing member 50 includes the opening portion 52 opened in the facing surface 51. The reinforcing member 50 is fixed to the outer case 10 while the convex part 14 is inserted into the opening portion 52. These configurations are common to those of the embodiment.

The present modification is different from the embodiment in that the fixing surface 13a of the outer case 10 is not an inner surface of the outer case 10 but an outer surface of the outer case 10. That is, in this modification, the reinforcing member 50 is fixed not to the inside but to the outside of the outer case 10. Even in this case, positioning and position maintenance of the reinforcing member 50 are appropriately performed by inserting the convex parts 14 into the opening portions 52 of the reinforcing member 50 in the work of attaching the reinforcing member 50 to the outer case 10. Therefore, the reinforcing member 50 can be accurately fixed to the position where reinforcement should be provided, and the positional displacement and the like at the time of using the energy storage apparatus 1c can be suppressed. Further, in this modification, the reinforcing member 50 made of a metal is not exposed to the internal space of the outer case 10 accommodating the plurality of energy storage devices 100, and hence it is advantageous in that the insulating member 130 (see Fig. 5) is unnecessary.

### [4. Other modifications]

Although the energy storage apparatus 1 according to the embodiment and its modifications of the present invention has been described above, the present invention is not limited to the embodiment and its modifications. That is, the embodiment disclosed herein is exemplary in all respects and not exhaustive, and the scope of the present invention includes all modifications within the meaning and scope equivalent to the claims.

The number and positions (see Figs. 2 to 5) of the convex parts 14 of the outer case 10 are not particularly limited. The number and positions of the convex parts 14 may be appropriately determined according to the number of the energy storage devices 100 accommodated in the outer case 10, the weight of the energy storage device unit 101, the size of the reinforcing member 50, or the like. The number and positions of the opening portions 52 of the reinforcing member 50 may be appropriately determined according to the number and positions of the convex parts 14.

The shape of the convex part 14 is not necessarily a cylindrical shape. In place of the convex part 14, a convex part having a polygonal shape when viewed from the protruding direction, such as a polygonal columnar shape, may be provided on the outer case 10. In this case, the opening portion 52 of the reinforcing member 50 may have a size and a shape that allow the convex part to be inserted.

The fixing surface 13 which is a surface of the outer case 10 to which the reinforcing member 50 is fixed is not necessarily a surface facing the bottom surfaces of the plurality of energy storage devices 100 (energy storage device unit 101). Inner surfaces or outer surfaces (see Fig. 2) on both sides of the outer case 10 in the X-axis direction may be fixing surfaces. Even in this case, it is sufficient that the outer shape of the reinforcing member 50 is larger than the outer shape of the energy storage device unit 101 when viewed from a direction perpendicular to the fixing surface (the X-axis direction). With such a configuration, even when an external force is applied to the energy storage apparatus 1 from a direction parallel to the reinforcing member 50 (the Z-axis direction), the reinforcing member 50 can resist the external force. The same applies to a case in which inner surfaces or outer surfaces (see Fig. 2) on both sides of the outer case 10 in the Y-axis direction are fixing surfaces. An inner surface or an outer surface of the outer case 10 positioned above the energy storage device unit 101 may be a fixing surface. In this case, the reinforcing member 50 can resist not only an external force applied from above but also an external force applied from a direction parallel to the reinforcing member 50 (a direction parallel to the XY plane).

The shape of the outer case 10 is not necessarily a rectangular parallelepiped shape as shown in Figs. 1 and 2. An outer case having another shape such as a columnar shape may be adopted as a case which accommodates the energy storage device unit 101.

A mode constructed by arbitrarily combining the constituent elements included in the above embodiment and the modification examples thereof is also included in the scope of the present invention.

### INDUSTRIAL APPLICABILITY

The present invention can be applied to an energy storage apparatus including an energy storage device such as a lithium ion secondary battery.

### DESCRIPTION OF REFERENCE SIGNS

1, 1A, 1a, 1b, 1c: energy storage apparatus
10, 10a: outer case
13, 13a: fixing surface
14, 24, 34: convex part
14a, 24a: proximal portion
14b, 24b: distal end portion
50, 50a: reinforcing member
51: facing surface
52, 52a: opening portion
100: energy storage device
101: energy storage device unit
130: insulating member
200: adhesive member

## Claims

1. An energy storage apparatus comprising:
an energy storage device unit including a plurality of energy storage devices;
an outer case accommodating the energy storage device unit; and
a plate-shaped reinforcing member fixed in a posture along a fixing surface which is an inner surface of the outer case or an outer surface of the outer case,
wherein an outer shape of the reinforcing member is larger than an outer shape of the energy storage device unit when viewed from a direction perpendicular to the fixing surface.

2. The energy storage apparatus according to claim 1, wherein an outer shape of the outer case is larger than an outer shape of the reinforcing member when viewed from a direction perpendicular to the fixing surface.

3. The energy storage apparatus according to claim 1 or 2, wherein
the fixing surface is the inner surface of the outer case, and
the reinforcing member is disposed inside the outer case.

4. The energy storage apparatus according to claim 1 or 2, wherein
the outer case includes a convex part being provided integrally with the outer case, the convex part protruding from the fixing surface, and
the reinforcing member includes an opening portion being opened to a facing surface that is a surface facing the fixing surface and is fixed to the fixing surface in a state in which the convex part is inserted into the opening portion.

5. The energy storage apparatus according to claim 4, wherein
the convex part includes:
a proximal portion protruding from the fixing surface; and
a distal end portion further protruding from the proximal portion,
an outer shape of the distal end portion is smaller than an outer shape of the proximal portion when the convex part is viewed from a protruding direction of the convex part, and
the opening portion of the reinforcing member is formed in a size that allows insertion of the distal end portion and does not allow insertion of the proximal portion.

6. The energy storage apparatus according to claim 5, wherein
the reinforcing member is supported by the proximal portion to form a gap between the reinforcing member and the fixing surface, and
the energy storage apparatus further comprises an adhesive member disposed in the gap and bonding the reinforcing member and the fixing surface to each other.

7. The energy storage apparatus according to claim 4, wherein
the opening portion is provided to penetrate the reinforcing member in a thickness direction of the reinforcing member, and
the convex part is formed in a size that makes the convex part protrude from the opening portion in a state in which the convex part is inserted into the opening portion, the convex part being disposed at a position facing the energy storage devices.

8. The energy storage apparatus according to claim 4, wherein
the opening portion is provided to penetrate the reinforcing member in a thickness direction of the reinforcing member, and
the convex part is formed in a size that makes the convex part not protrude from the opening portion in a state in which the convex part is inserted into the opening portion.
